# FASCICULE DE BREVET EUROPEEN

(11) **EP 2 369 717 B1**
(45) Date de publication et mention de la délivrance du brevet: **12.03.2014**
(21) Numéro de dépôt: 11155248.5
(22) Date de dépôt: 21.02.2011
(51) Int. Cl.: H02J 9/06, H02P 29/00, H02P 9/48, H02P 9/00

(54) **Dispositif de régulation d'une machine électrique tournante de véhicule automobile, et machine comprenant ce dispositif de régulation**
Reguliervorrichtung einer elektrisch umlaufenden Maschine eines Kraftfahrzeugs, und mit einer solchen Reguliervorrichtung ausgestattete Maschine
Device for regulating a rotating electric machine of an automobile and machine including said regulation device

(30) Priorité: 26.03.2010 FR 1052194
(43) Date de publication de la demande: 28.09.2011
(73) Titulaire: Valeo Equipements Electriques Moteur, 94046 Créteil Cedex (FR)
(72) Inventeur: Fourmy, Stéphane, 94400, VITRY SUR SEINE (FR); Rechdan, Raymond, 94440, VILLECRESNES (FR)

(56) Documents cités:
- WO-A1-2006/029582
- DE-A1-102008 000 147
- FR-A1- 2 845 837

## Description

### DOMAINE TECHNIQUE DE L'INVENTION.

La présente invention concerne un dispositif de régulation d'une machine électrique tournante polyphasée, notamment du type des alternateurs ou alternateurs-démarreurs équipant les véhicules automobiles. L'invention concerne également une machine électrique tournante utilisant ce dispositif.

### ARRIERE PLAN TECHNOLOGIQUE DE L'INVENTION.

Dans le domaine de l'automobile, il est bien connu de maintenir la tension fournie au réseau électrique de bord par l'alternateur du véhicule à une valeur de consigne prédéterminée, indépendamment de la vitesse de rotation du moteur ou de la consommation électrique des équipements, au moyen d'un dispositif de régulation dit « régulateur ».

De nos jours, les équipementiers de l'automobile ont développé des alternateurs et des alternateurs-démarreurs très performants en mettant en oeuvre des régulateurs électroniques faisant appel à des techniques numériques.

Cependant, les régulateurs électroniques peuvent être sensibles aux microcoupures de leurs alimentations électriques et aux perturbations transitoires transmises par le réseau de bord.

Le document DE 10 2008 000 147 A1 décrit un dispositif de régulation d'une machine électrique tournante polyphasée.

### DESCRIPTION GENERALE DE L'INVENTION.

La présente invention vise donc à améliorer la robustesse d'un régulateur électronique contre des microcoupures de leurs alimentations électriques et contre des perturbations transitoires transmises par le réseau de bord du véhicule.

Elle a précisément pour objet un dispositif de régulation d'une machine électrique tournante polyphasée de véhicule automobile, du type de ceux aptes à asservir à une valeur de consigne prédéterminée une tension continue d'un réseau électrique de bord alimenté par cette machine en contrôlant au moyen d'un bloc analogique de commande un courant d'excitation périodique présentant un rapport cyclique qui est déterminé par un bloc numérique de traitement à partir d'une tension d'erreur entre la valeur de consigne prédéterminée et la tension continue du réseau électrique, le dispositif comportant un système de mise en autarcie électrique du bloc numérique de traitement, et le système comprenant des moyens de maintien de tension à capacité d'autarcie pour fournir une tension d'alimentation avec autarcie alimentant exclusivement le bloc numérique de traitement.

Le dispositif de régulation selon l'invention est remarquable en ce qu'il comprend des moyens de gestion d'autarcie pour gérer l'autarcie du bloc numérique de traitement en fonction de l'amplitude de la tension d'alimentation avec autarcie, et en ce que les moyens de gestion d'autarcie comportent des moyens d'arrêt d'au moins une horloge du bloc numérique de traitement quand la tension d'alimentation avec autarcie est inférieure à une tension d'alimentation d'alimentation de référence du bloc numérique.

De plus, ces mêmes moyens de gestion d'autarcie comportent avantageusement des moyens de réinitialisation d'au moins un circuit de commande numérique du bloc numérique de traitement quand la tension d'alimentation avec autarcie est inférieure à une tension de réinitialisation de référence du bloc numérique.

Le dispositif de régulation d'une machine électrique tournante polyphasée de véhicule automobile selon l'invention est également remarquable en ce que la capacité des moyens de maintien de tension à capacité d'autarcie est reliée au réseau de bord par au moins une diode anti-retour.

Fort avantageusement, les moyens de maintien de tension à capacité d'autarcie comportent des moyens de limitation de la tension d'alimentation avec autarcie; ces moyens de limitation comprennent préférentiellement au moins une diode de Zener.

Alternativement, les moyens de maintien de tension à capacité d'autarcie comportent des moyens de régulation de la tension d'alimentation avec autarcie, ces moyens de régulation comprenant de préférence au moins un comparateur et un élément de commutation tel que transistor.

L'invention concerne aussi une machine électrique tournante polyphasée de véhicule automobile apte à fonctionner en génératrice comprenant un dispositif de régulation présentant les caractéristiques spécifiées ci-dessus.

Ces quelques spécifications essentielles auront rendu évidents pour l'homme de métier les avantages apportés par le dispositif de régulation selon l'invention, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma synoptique d'un dispositif de régulation d'une machine électrique tournante polyphasée de véhicule automobile, comprenant un bloc numérique de traitement et un bloc analogique de commande, connu de l'état de la technique.
La **Figure 2** est un schéma synoptique montrant l'agencement du bloc numérique de traitement et du bloc analogique de commande dans un dispositif de régulation d'une machine électrique tournante polyphasée de véhicule automobile selon l'invention.
La **Figure 3** est un diagramme montrant le fonctionnement d'un circuit de maintien de tension à capacité d'autarcie inclut dans le dispositif de régulation selon l'invention.
La **Figure 4** montre une forme de réalisation particulière du circuit de maintien de tension avec capacité d'autarcie inclut dans le dispositif de régulation selon l'invention.

### DESCRIPTION DES MODES DE REALISATION PREFERES DE L'INVENTION.

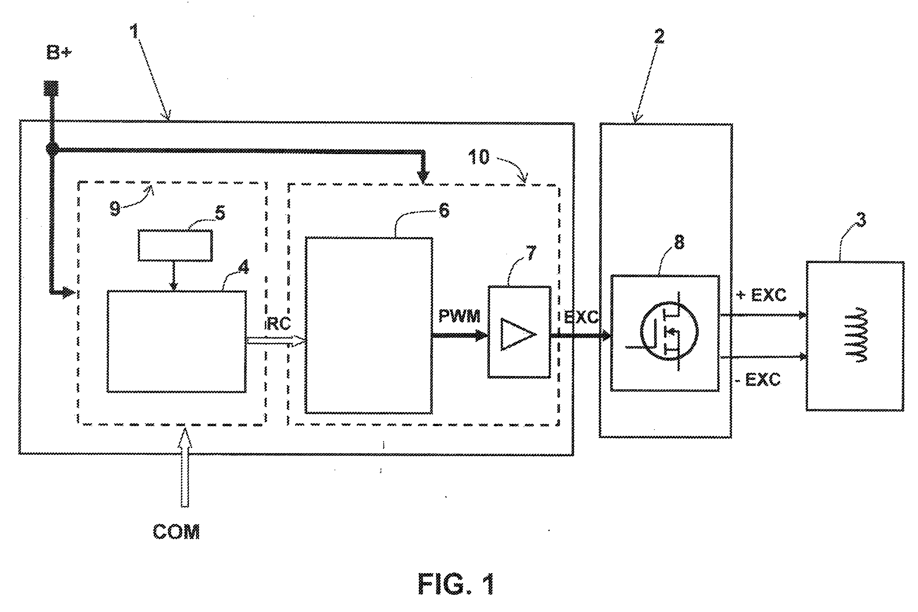

Le schéma synoptique de la **Figure 1** concerne un dispositif de l'état de la technique dans lequel sont inclus différents éléments du type de dispositif de régulation 1, 2 concerné par l'invention.

Ce dispositif de régulation 1, 2 comprend essentiellement deux parties 1, 2 : à savoir, un circuit de contrôle 1 et une électronique de puissance 2 comportant des transistors 8 de type MOSFET (transistor à effet de champ à grille isolée) de contrôle du courant d'excitation +EXC,-EXC appliqué au bobinage d'excitation 3 de la machine électrique tournante. On notera que les circuits 1 et 2 peuvent être réalisés sous la forme d'un ASIC unique de type dit monolithique.

Le circuit de contrôle 1 comprend notamment :
- un bloc numérique de traitement 9 comprenant un circuit de commande numérique 4 et un système d'horloges temps réel 5 ; et
- un bloc analogique de commande 10 comprenant un générateur 6 d'impulsions PWM, dont le rapport cyclique RC est déterminé par le circuit de commande numérique 4 ; et un circuit d'adaptation de signal 7 dit « driver » de ces impulsions PWM produisant les signaux de commande EXC des transistors 8 de l'électronique de puissance 2. On notera ici que le circuit 7 peut comprendre un amplificateur et un circuit à pompe de charge.

La valeur de consigne de la boucle de régulation est ici fixée via un circuit d'interface relié à travers une ligne de communication COM à une unité de contrôle moteur (non représentée) du véhicule.

Le bloc numérique de traitement 9, constitué par le circuit de commande numérique 4 et le système d'horloges 5, et le bloc analogique de commande 10, constitué par le générateur 6 d'impulsions PWM et son circuit d'adaptation de signal 7, sont alimentés en parallèle par le réseau électrique de bord B+.

En général, la tension minimale de fonctionnement du circuit de contrôle 1 d'un régulateur 1, 2 est comprise entre 5V et 8V.

Certaines perturbations transitoires sur le réseau électrique de bord B+ produisent des « trous » de tension, ou microcoupures, dont le niveau descend sous la tension minimale de fonctionnement du régulateur 1, 2, et qui peuvent être la cause de dysfonctionnements.

Conformément à l'invention, Il est mis en place dans le circuit de contrôle 1 un système de mise en autarcie électrique du bloc numérique de traitement 9 autorisant un fonctionnement satisfaisant du régulateur 1, 2, même en cas de microcoupures du réseau électrique de bord B+.

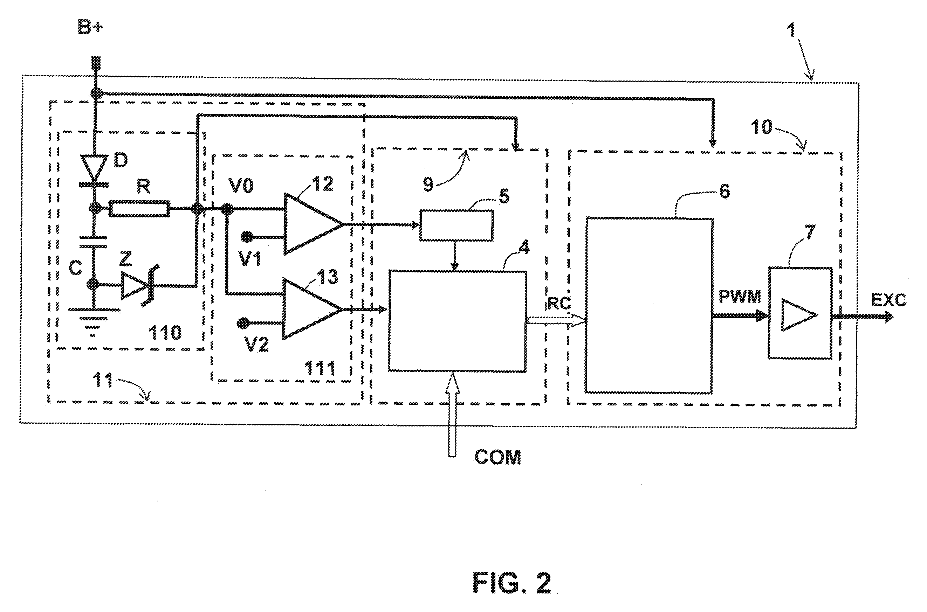

La **Figure 2** montre schématiquement une solution technique à ce problème consistant, selon l'invention, en la mise en place dans le circuit de contrôle 1 d'un système de mise en autarcie électrique 11 de telle sorte que le bloc numérique de traitement 9 reste alimenté sous une tension d'alimentation avec autarcie V0 même pendant des microcoupures du réseau de bord B+.

Le système de mise en autarcie électrique 11 comprend un circuit 110 de maintien de tension à capacité d'autarcie C et un circuit 111 de gestion d'autarcie.

L'invention permet avantageusement d'utiliser une capacité d'autarcie C de faible valeur, par exemple, de l'ordre de 600 pF dans une forme de réalisation particulière. Cela est rendu possible, comme cela apparaîtra plus clairement par la suite, d'une part, par le fait que la tension d'alimentation est maintenue, au moyen de la capacité C, uniquement pour le bloc numérique 11 et, d'autre part, par la gestion d'autarcie effectuée par le circuit 111. On notera ici que la faible valeur de capacité d'autarcie autorisée par l'invention permet une intégration aisée de cette capacité C dans un régulateur selon l'invention réalisé sous la forme d'un ASIC.

Le circuit de maintien de tension avec autarcie 110 comporte ici, dans cette forme de réalisation particulière, la capacité d'autarcie C, une diode D, une résistance R et une diode de Zener Z.

La diode D est une diode anti-retour entre la capacité C et le réseau électrique de bord B+. Cette diode D prévient la décharge de cette capacité C sur le réseau B+ pendant les microcoupures et perturbations électriques.

La résistance R et la diode de Zener Z assurent un écrêtage et une limitation de la tension d'alimentation avec autarcie V0.

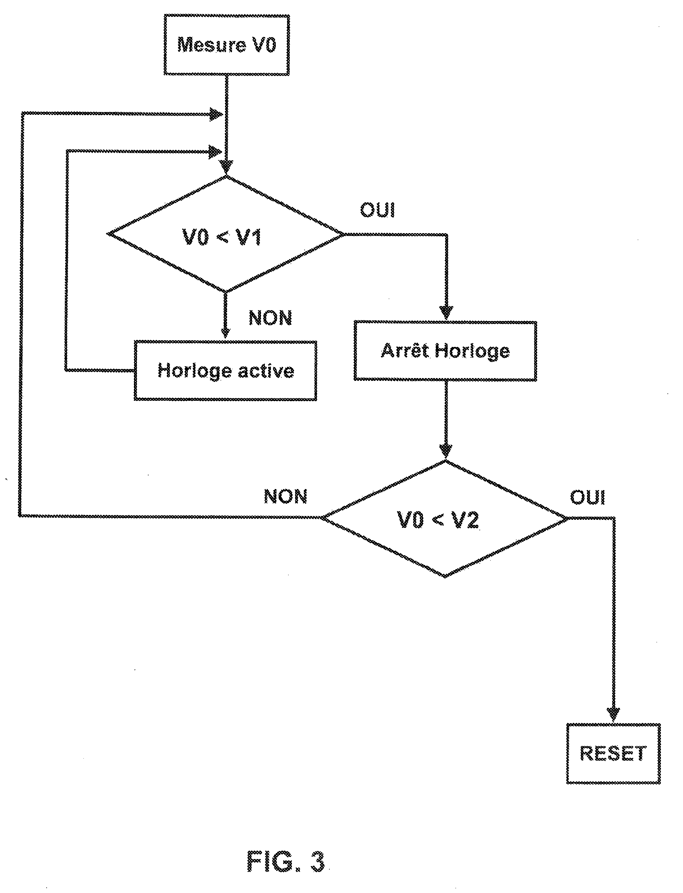

La stratégie de gestion d'autarcie mise en oeuvre au moyen du circuit de gestion d'autarcie 111 est maintenant décrite en référence aussi à la **Figure 3**.

Comme le montre le diagramme de la **Figure 3**, cette stratégie consiste à mettre en oeuvre dans le système de mise en autarcie 11 des moyens d'arrêt 12 du système d'horloges 5 du bloc numérique de traitement 9 quand la tension d'alimentation avec autarcie V0 ne peut plus être maintenue par le circuit de maintien de tension avec autarcie 110 à une valeur au moins égale à une tension d'alimentation de référence V1 du bloc numérique 9. La tension d'alimentation de référence V1 du bloc numérique 9 est de l'ordre de 3V dans cette forme de réalisation particulière.

L'arrêt des horloges fournies par le système d'horloges 5 fait passer le bloc numérique 9, et notamment le circuit de commande numérique 4, dans un état de consommation négligeable. Dans cet état, les valeurs numériques contenues dans les registres du bloc numérique 9 sont sauvegardées intégralement. Cet état de consommation négligeable du bloc numérique 9 autorise, comme indiqué plus haut dans la description, l'utilisation d'une capacité d'autarcie C de faible valeur.

Le circuit de commande numérique 4 est alimenté par le circuit de maintien de tension avec autarcie 110 avec une amplitude de tension suffisante à la sauvegarde des valeurs numériques dans les registres jusqu'au moment où la tension d'alimentation avec autarcie V0 chute en dessous d'une tension de réinitialisation de référence V2 du bloc numérique 9.

Lorsque la tension d'alimentation avec autarcie V0 chute en dessous de V2, des moyens de réinitialisation 13 que comportent le circuit de gestion d'autarcie 111 provoquent la réinitialisation du circuit de commande numérique 4.

La tension de réinitialisation de référence V2 du bloc numérique 9 doit avoir un niveau suffisant, généralement de l'ordre de 1 V, pour que les registres du circuit de commande numérique 4 restent dans un état déterministe avant la réinitialisation.

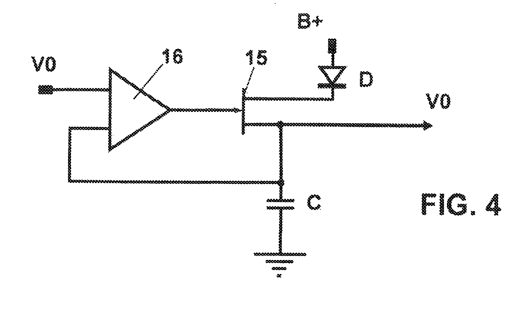

La **Figure 4** montre une forme de réalisation perfectionnée 110' du circuit de maintien de tension avec autarcie, par rapport au circuit de la **Figure 2****.**

Dans cette forme de réalisation, il est prévu un élément de commutation, tel qu'un transistor 15, et un comparateur 16 pour réguler à une valeur optimale la tension d'alimentation avec autarcie V0 qui est obtenue aux bornes de la capacité C du circuit de maintien de tension avec autarcie 110'.

Bien entendu, l'invention ne se limite pas aux seules formes de réalisation particulières décrites dans la description.

Notamment, les types de composants électroniques cités ne sont donnés qu'à titre d'exemples. La mise en oeuvre de tout autre type de composants ayant les mêmes fonctionnalités ne constituerait que des variantes de réalisation.

Ces autres modes de réalisation ne sortiraient pas du cadre de la présente invention dans la mesure où les caractéristiques du dispositif de régulation résultent des revendications ci-après.

## Revendications

1. Dispositif de régulation (1, 2) d'une machine électrique tournante polyphasée de véhicule automobile, du type de ceux aptes à asservir à une valeur de consigne prédéterminée une tension continue (B+) d'un réseau électrique de bord alimenté par ladite machine en contrôlant au moyen d'un bloc analogique de commande (10) un courant d'excitation (+EXC,-EXC) périodique présentant un rapport cyclique (RC) qui est déterminé par un bloc numérique de traitement (9) à partir d'une tension d'erreur entre ladite valeur de consigne prédéterminée et ladite tension continue (B+) du réseau électrique de bord, ledit dispositif comportant un système de mise en autarcie électrique (11) dudit bloc numérique de traitement (9), et ledit système (11) comprenant des moyens de maintien de tension à capacité d'autarcie (110) pour fournir une tension d'alimentation avec autarcie (V0) alimentant exclusivement ledit bloc numérique de traitement (9) ; **caractérisé en ce qu'**il comporte également des moyens de gestion d'autarcie (111) pour gérer l'autarcie du bloc numérique de traitement (9) en fonction de l'amplitude de la tension d'alimentation avec autarcie (V0), et **en ce que** lesdits moyens de gestion d'autarcie (111) comportent des moyens d'arrêt (12) d'au moins une horloge (5) dudit bloc numérique de traitement (9) quand ladite tension d'alimentation avec autarcie (V0) est inférieure à une tension d'alimentation de référence (V1) dudit bloc numérique (9).

2. Dispositif de régulation (1, 2) d'une machine électrique tournante polyphasée de véhicule automobile selon la revendication 1, **caractérisé en ce que** lesdits moyens de gestion d'autarcie (111) comportent des moyens de réinitialisation (13) d'au moins un circuit de commande numérique (4) dudit bloc numérique de traitement (9) quand ladite tension d'alimentation avec autarcie (V0) est inférieure à une tension de réinitialisation de référence (V2) dudit bloc numérique (9).

3. Dispositif de régulation (1, 2) d'une machine électrique tournante polyphasée de véhicule automobile selon la revendication 1 ou 2, **caractérisé en ce que** ladite capacité (C) desdits moyens de maintien de tension à capacité d'autarcie (110) est reliée audit réseau de bord (B+) par au moins une diode anti-retour (D).

4. Dispositif de régulation (1, 2) d'une machine électrique tournante polyphasée de véhicule automobile selon la revendication 3, **caractérisé en ce que** lesdits moyens de maintien de tension à capacité d'autarcie (110) comportent des moyens de limitation (R, Z) de ladite tension d'alimentation avec autarcie (V0).

5. Dispositif de régulation (1, 2) d'une machine électrique tournante polyphasée de véhicule automobile selon la revendication 4, **caractérisé en ce que** lesdits moyens de limitation comprennent au moins une diode Zener (Z).

6. Dispositif de régulation (1, 2) d'une machine électrique tournante polyphasée de véhicule automobile selon la revendication 1 ou 2, **caractérisé en ce que** lesdits moyens de maintien de tension à capacité d'autarcie (110) comportent des moyens de régulation (15, 16) de ladite tension d'alimentation avec autarcie (V0).

7. Dispositif de régulation (1, 2) d'une machine électrique tournante polyphasée de véhicule automobile selon la revendication 6, **caractérisé en ce que** lesdits moyens de régulation (15, 16) comprennent au moins un comparateur (16) et un élément de commutation (15) tel que transistor.

8. Machine électrique tournante polyphasée de véhicule automobile apte à fonctionner en génératrice comprenant un dispositif de régulation (1, 2) selon l'une quelconque des revendications 1 à 7 précédentes.

## Patentansprüche

1. Vorrichtung (1, 2) zur Regelung einer mehrphasigen drehenden elektrischen Maschine eines Kraftfahrzeugs von der Art derer, die eine Gleichspannung (B+) eines von der Maschine gespeisten elektrischen Bordnetzes auf einen vorbestimmten Sollwert regeln können, indem mittels eines analogen Steuerblocks (10) ein periodischer Erregerstrom (+EXC, -EXC) gesteuert wird, der ein zyklisches Verhältnis (RC) hat, das von einem digitalen Verarbeitungsblock (9) ausgehend von einer Fehlerspannung zwischen dem vorbestimmten Sollwert und der Gleichspannung (B+) des elektrischen Bordnetzes festgelegt wird, wobei die Vorrichtung ein System (11) zum Versetzen des digitalen Verarbeitungsblocks (9) in elektrische Autarkie aufweist, und das System (11) Spannungserhaltungseinrichtungen mit Autarkiekondensator (110) enthält, um eine Speisespannung mit Autarkie (V0) zu liefern, die ausschließlich den digitalen Verarbeitungsblock (9) speist; **dadurch gekennzeichnet, dass** sie ebenfalls Autarkieverwaltungseinrichtungen (111) aufweist, um die Autarkie des digitalen Verarbeitungsblocks (9) abhängig von der Amplitude der Speisespannung mit Autarkie (V0) zu verwalten, und dass die Autarkieverwaltungseinrichtungen (111) Anhalteeinrichtungen (12) mindestens eines Taktgebers (5) des digitalen Verarbeitungsblocks (9) aufweisen, wenn die Speisespannung mit Autarkie (V0) niedriger als eine Bezugsspeisespannung (V1) des digitalen Blocks (9) ist.

2. Vorrichtung (1, 2) zur Regelung einer mehrphasigen drehenden elektrischen Maschine eines Kraftfahrzeugs nach Anspruch 1, **dadurch gekennzeichnet, dass** die Autarkieverwaltungseinrichtungen (111) Einrichtungen (13) zur Rücksetzung mindestens einer digitalen Steuerschaltung (4) des digitalen Verarbeitungsblocks (9) aufweisen, wenn die Speisespannung mit Autarkie (V0) niedriger als eine Bezugsrücksetzspannung (V2) des digitalen Blocks (9) ist.

3. Vorrichtung (1, 2) zur Regelung einer mehrphasigen drehenden elektrischen Maschine eines Kraftfahrzeugs nach Anspruch 1 oder 2, **dadurch gekennzeichnet, dass** der Kondensator (C) der Spannungserhaltungseinrichtungen mit Autarkiekondensator (110) mit dem Bordnetzwerk (B+) über mindestens eine Antirücklaufdiode (D) verbunden ist.

4. Vorrichtung (1, 2) zur Regelung einer mehrphasigen drehenden elektrischen Maschine eines Kraftfahrzeugs nach Anspruch 3, **dadurch gekennzeichnet, dass** die Spannungserhaltungseinrichtungen mit Autarkiekondensator (110) Einrichtungen (R, Z) zur Begrenzung der Speisespannung mit Autarkie (V0) enthalten.

5. Vorrichtung (1, 2) zur Regelung einer mehrphasigen drehenden elektrischen Maschine eines Kraftfahrzeugs nach Anspruch 4, **dadurch gekennzeichnet, dass** die Begrenzungseinrichtungen mindestens eine zener-Diode (Z) enthalten.

6. Vorrichtung (1, 2) zur Regelung einer mehrphasigen drehenden elektrischen Maschine eines Kraftfahrzeugs nach Anspruch 1 oder 2, **dadurch gekennzeichnet, dass** die Spannungserhaltungseinrichtungen mit Autarkiekondensator (110) Einrichtungen (15, 16) zur Regelung der Speisespannung mit Autarkie (V0) aufweisen.

7. Vorrichtung (1, 2) zur Regelung einer mehrphasigen drehenden elektrischen Maschine eines Kraftfahrzeugs nach Anspruch 6, **dadurch gekennzeichnet, dass** die Regeleinrichtungen (15, 16) mindestens einen Komparator (16) und ein Schaltelement (15) wie einen Transistor enthalten.

8. Mehrphasige drehende elektrische Maschine eines Kraftfahrzeugs, die als Generator arbeiten kann, die eine Regelvorrichtung (1, 2) nach einem der vorhergehenden Ansprüche 1 bis 7 enthält.

## Claims

1. Device (1,2) for regulating a polyphase rotating electric machine of a motor vehicle, of the type capable of slaving to a predetermined preset value a DC voltage (B+) of an on-board electrical system supplied with power by said machine while controlling by means of an analogue control unit (10) a periodic excitation current (+EXC, -EXC) exhibiting a cyclic ratio (RC) that is determined by a digital processing unit (9) on the basis of an error voltage between said predetermined preset value and said DC voltage (B+) of the on-board electrical system, said device having a system for establishing electrical autarky (11) for said digital processing unit (9), and said system (11) comprising means (110) for maintaining a voltage at autarky capacitance in order to provide an autarkic supply voltage (V0) exclusively supplying power to said digital processing unit (9); **characterized in that** it also has autarky management means (111) for managing the autarky of the digital processing unit (9) as a function of the amplitude of the autarkic supply voltage (V0), and **in that** said autarky management means (111) have means (12) for stopping at least one clock (5) of said digital processing unit (9) when said autarkic supply voltage (V0) is less than a reference supply voltage (V1) for said digital unit (9).

2. Device (1,2) for regulating a polyphase rotating electric machine of a motor vehicle according to Claim 1, **characterized in that** said autarky management means (111) have means (13) for resetting at least one digital control circuit (4) of said digital processing unit (9) when said autarkic supply voltage (V0) is below a reference reset voltage (V2) for said digital unit (9).

3. Device (1,2) for regulating a polyphase rotating electric machine of a motor vehicle according to Claim 1 or 2, **characterized in that** said capacitance (C) of said means (110) for maintaining a voltage at autarky capacitance is connected to said on-board system (B+) by at least one anti-feedback diode (D).

4. Device (1,2) for regulating a polyphase rotating electric machine of a motor vehicle according to Claim 3, **characterized in that** said means (110) for maintaining a voltage at autarky capacitance have means (R,Z) for limiting said autarkic supply voltage (V0).

5. Device (1,2) for regulating a polyphase rotating electric machine of a motor vehicle according to Claim 4, **characterized in that** said limiting means comprise at least one Zener diode (Z).

6. Device (1,2) for regulating a polyphase rotating electric machine of a motor vehicle according to Claim 1 or 2, **characterized in that** said means (110) for maintaining a voltage at autarky capacitance have means (15, 16) for regulating said autarkic supply voltage (V0).

7. Device (1,2) for regulating a polyphase rotating electric machine of a motor vehicle according to Claim 6, **characterized in that** said regulating means (15, 16) comprise at least one comparator (16) and a switching element (15) such as a transistor.

8. Polyphase rotating electric machine of a motor vehicle capable of operating as a generator comprising a regulating device (1,2) according to any one of the preceding Claims 1 to 7.
